# EUROPÄISCHE PATENTSCHRIFT

(11) **EP 1 070 978 B1**
(45) Veröffentlichungstag und Bekanntmachung des Hinweises auf die Patenterteilung: **30.07.2003**
(21) Anmeldenummer: 00111399.2
(22) Anmeldetag: 26.05.2000
(51) Int. Cl.: G02C 7/04

(54) **Contactlinse bzw. Intraokularlinse mit Fern- und Nahwirkungszonen**
Contact lens respectively intraocular lens with far and near power correction regions
Lentille de contact respectivement lentille intra-oculaire avec des zones pour la vision de loin et la vision de près

(30) Priorität: 19.07.1999 DE 19933775
(43) Veröffentlichungstag der Anmeldung: 24.01.2001
(73) Patentinhaber: HECHT CONTACTLINSEN GMBH, D-79280 Au (DE)
(72) Erfinder: Muckenhirn, Stefan, 79280 Au (DE); Muckenhirn, Dieter, 79299 Wittnau (DE); Widmer, Frank, 79289 Horben (DE)
(74) Vertreter: Prüfer, Lutz H., Dipl.-Phys.

(56) Entgegenhaltungen:
- EP-A- 0 138 394
- EP-A- 0 741 314
- GB-A- 2 288 033
- US-A- 4 861 152
- US-A- 5 691 797
- BRONSTEIN-SEMENDJAJEW:"Taschenbuch der Mathematik", 1967, TEUBNER VERLAGSGESELLSCHAFT, LEIPZIG

## Beschreibung

Die Erfindung betrifft eine Contactlinse bzw. Intraokularlinse mit einer Nahwirkungszone und einer diese konzentrisch umgebenden Fernwirkungszone.

Bifokallinsen sind beispielsweise aus der DE 41 25 707 C bekannt. Bei solchen Bifokallinsen besteht ein Problem darin, die Fernwirkungszone und die Nahwirkungszone trotz des sich bewegenden Auges stets richtig zu positionieren und so ein funktionsgerechtes Sehen zu ermöglichen.

In der CA 986 343 sowie dem Aufsatz von Milton M. Kaplan "The Aplanatic Contact Lense" in The Optometry Weekly, 9.2.1967, Seiten 25 bis 29 und 16.2.1967, Seiten 42 bis 45 sind aplanatische Contactlinsen beschrieben.

Aufgabe der Erfindung ist es, eine Linse der Eingangs beschriebenen Art zu schaffen, die ein besonders funktionsgerechtes und komfortables Sehen ermöglicht.

Diese Aufgabe wird durch die in Patentanspruch 1 gekennzeichnete Linse gelöst. Weiterbildungen sind in den Unteransprüchen gekennzeichnet.

Weitere Merkmale und Zweckmäßigkeiten der Erfindung ergeben sich aus der Beschreibung eines Ausführungsbeispieles anhand der Figuren. Von den Figuren zeigen:

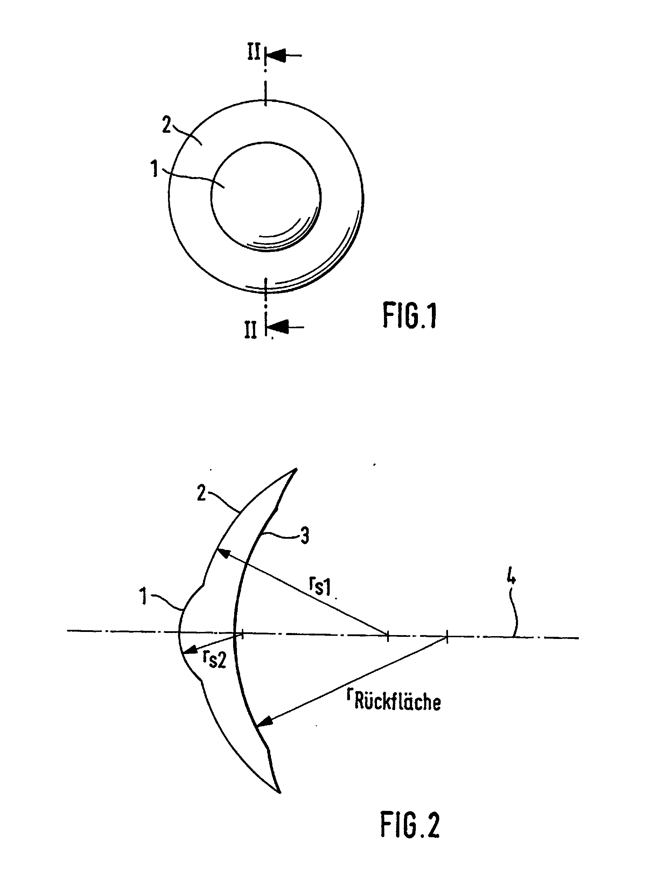

- Fig.1: eine Draufsicht auf die Contactlinse;
- Fig. 2: einen Schnitt entlang der Linie II-II in Fig. 1 in vergrößertem Maßstab.

Die Contactlinse weist eine im Zentrum der Linse liegende Nahwirkungszone 1 und eine diese konzentrisch umgebende Fernwirkungszone 2 auf. Der Durchmesser der Nahwirkungszone liegt im Bereich von 1,5 bis 3,5 mm, vorzugsweise im Bereich von 1,8 bis 3 mm und ganz besonders bevorzugt im Bereich zwischen 2 und 2,6 mm. Der Außendurchmesser der Linse wird in bekannter Weise gewählt.

Die Rückfläche 3 der Contactlinse ist in üblicher Weise ausgebildet und wird so gewählt, daß sie an die Hornhautform des Patienten angepaßt ist.

Die Fernwirkungszone 2 ist als elliptische Vorderfläche ausgebildet, deren Hauptscheitel und Krümmungsmittelpunkt auf der optischen Achse 4 der Linse liegt. Die numerische Exzentrizität der elliptischen Fläche ist größer 0 und kleiner 1 und liegt bevorzugt im Bereich zwischen 0,4 und 0,8 und ganz besonders zwischen 0,5 und 0,7. Die Vorderfläche der Nahwirkungszone 1 ist asphärisch-elliptisch ausgebildet. Die Exzentrizität der Nahwirkungszone ist vorzugsweise kleiner 0,7, insbesondere kleiner 0,5. Der Radius r_{S2} der Nahwirkungszone 1 ist kleiner als der Radius r_{S1} der Fernwirkungszone 2. Auch bei der Nahwirkungszone liegen der Hauptscheitel und der Krümmungsmittelpunkt auf der optischen Achse 4. Die Exzentrizität ist jeweils kleiner als die der Fernwirkungszone.

Die elliptische Fläche der Fernwirkungszone 2 wirkt bei einer Abbildung eines im Nahbereich angeordneten Gegenstandes so, als wäre die Fernwirkungszone mit einem Nahzusatz versehen, wobei das Ausmaß des so wirkenden Nahzusatzes von dem Grad der Exzentrizität abhängt. Die fehlende Nahwirkung wird durch die zusätzliche Nahwirkungszone 1 erreicht. Der Nahzusatz für die Nahwirkungszone 1 kann deshalb um diesen aus der Fernwirkungszone für das Sehen in der Nähe herrührenden scheinbaren Nahzusatz vermindert werden. Die gesamte Nahwirkung der Linse wird umso größer, je kleiner der Radius r_{S2} der Nahwirkungszone 1 im Vergleich zum Radius r_{S1} der Fernwirkungszone 2 und je größer der Durchmesser der Nahwirkungszone 1 ist.

Benötigt beispielsweise ein Proband eine Korrektur von +1 dpt. in der Ferne und normalerweise einen Nahzusatz von 2 dpt. und ist die Exzentrizität so gewählt, daß die Fernwirkungszone für das Sehen in der Nähe wegen der Exzentrizität so wirkt, als hätte sie einen Nahzusatz von 0,75 dpt., dann kann für diesen Fall der Zusatz für die Nahzone um 0,75 dpt. auf 1,25 dpt. abgeschwächt werden. Auf diese Weise entsteht ein wesentlich geringerer Unterschied zwischen Nahzone und Fernzone. Das Sehen wird wesentlich komfortabler.

Die oben beschriebene Ausbildung einer Multifokal-Contactlinse ist sowohl für formstabile wie auch für weiche Contactlinsen und für Sklerallinsen geeignet. Als Intraokularlinse hat sie den gleichen Aufbau, ist jedoch als Bi-Linse ausgebildet.

## Patentansprüche

1. Contactlinse bzw. Intraokularlinse mit einer Nahwirkungszone (1) und einer diese konzentrisch umgebenden Fernwirkungszone (2),
**dadurch gekennzeichnet, daß** sowohl die Nahwirkungszone (1) als auch die Fernwirkungszone (2) eine elliptisch asphärische Vorderfläche aufweist, wobei die Exzentrizität ε der Nahwirkungszone kleiner ist als die der Fernwirkungszone.

2. Linse mit einer Nahwirkungszone (1) und einer diese konzentrisch umgebenden Fernwirkungszone (2) nach Anspruch 1, **dadurch gekennzeichnet, daß** die Exzentrizität ε der Fernwirkungszone (2) im Bereich zwischen 0,4 und 0,8 liegt.

3. Linse nach Anspruch 1, **dadurch gekennzeichnet, daß** die Exzentrizität der Fernwirkungszone (2) im Bereich zwischen 0,5 und 0,7 liegt.

4. Linse mit einer Nahwirkungszone (1) und einer diese konzentrisch umgebenden Fernwirkungszone (2), nach Anspruch 1, 2 oder 3,
**dadurch gekennzeichnet, daß** der Durchmesser der Nahwirkungszone (1) im Bereich von 1,5 bis 3 mm liegt.

5. Linse nach einem der Ansprüche 1 bis 4, **dadurch gekennzeichnet, daß** der Durchmesser der Nahwirkungszone (1) im Bereich von 2 bis 2,6 mm liegt.

6. Linse mit einer Nahwirkungszone (1) und einer diese konzentrisch umgebenden Fernwirkungszone (2), nach Anspruch 1,
**dadurch gekennzeichnet, daß** die Exzentrizität der Nahwirkungszone (1) ferner kleiner 0,7 ist.

7. Linse nach Anspruch 1, **dadurch gekennzeichnet, daß** die Exzentrizität der Nahwirkungszone (1) ferner kleiner 0,5 ist.

## Claims

1. A contact lens or an intra-ocular lens with a near zone (1) arid a distance zone (2) concentrically encircling the latter, **characterised in that** both the near zone (1) and the distance zone (2) has [sic; recte: have] an elliptically aspherical anterior surface, wherein the eccentricity Σ of the near zone is smaller than that of the distance zone.

2. A lens with a near zone (1) and a distance zone (2) concentrically encircling the latter according to Claim 1, **characterised in that** the eccentricity Σ of the distance zone (2) is within the range 0.4 to 0.8.

3. A lens according to claim 1, **characterised in that** the eccentricity of the distance zone (2) is within the range 0.5 to 0.7.

4. A lens with a near zone (1) and a distance zone (2) concentrically encircling the latter, according to Claim 1, 2 or 3, **characterised in that** the diameter of the near zone (1) is within the range 1.5 to 3 mm.

5. A lens according to one of Claims 1 to 4, **characterised in that** the diameter of the near zone (1) is within the range 2 to 2.6 mm.

6. A lens with a near zone (1) and a distance zone (2) concentrically encircling the latter, according to Claim 1, **characterised in that** the eccentricity of the near zone (1) is furthermore less than 0.7.

7. A lens according to claim 1, **characterised in that** the eccentricity of the near zone (1) is furthermore less than 0.5.

## Revendications

1. Lentille de contact ou lentille infra-oculaire avec une zone de vision de près (1) et une zone de vision de loin (2) l'entourant de manière concentrique, **caractérisée en ce que**, aussi bien la zone de vision de près (1) que la zone de vision de loin (2) comprend une face avant elliptique et asphérique, l'excentricité ξ de la zone de vision de près (1) étant inférieure à celle de la zone de vision de loin (2).

2. Lentille avec une zone de vision de près (1) et une zone de vision de loin (2) l'entourant de manière concentrique, selon la revendication 1, **caractérisée en ce que** l'excentricité de la zone de vision de loin (2) est située entre 0,4 et 0,8.

3. Lentille selon la revendication 1, **caractérisée en ce que** l'excentricité de la zone de vision de loin (2) est située entre 0,5 et 0,7.

4. Lentille avec une zone de vision de près (1) et une zone de vision de loin (2) l'entourant de manière concentrique, selon la revendication 1, 2 ou 3, **caractérisée en ce que** le diamètre de la zone de vision de près (1) est situé entre 1,5 et 3 mm.

5. Lentille selon l'une des revendications 1 à 4, **caractérisée en ce que** le diamètre de la zone de vision de près (1) est situé entre 2 et 2,6 mm.

6. Lentille avec une zone de vision de près (1) et une zone de vision de loin (2) l'entourant de manière concentrique, selon la revendication 1, **caractérisée en ce que** l'excentricité de la zone de vision de près (1) est inférieure à 0,7.

7. Lentille selon la revendication 1, **caractérisée en ce que** l'excentricité de la zone de vision de près (1) est inférieure à 0,5.
